# EUROPEAN PATENT SPECIFICATION

(11) **EP 4 411 215 B1**
(45) Date of publication and mention of the grant of the patent: **08.10.2025**
(21) Application number: 24155926.9
(22) Date of filing: 06.02.2024
(51) Int. Cl.: F21V 8/00, G03B 21/20

(54) **LIGHT SOURCE DEVICE AND PROJECTOR**
LICHTQUELLENVORRICHTUNG UND PROJEKTOR
DISPOSITIF DE SOURCE DE LUMIÈRE ET PROJECTEUR

(30) Priority: 06.02.2023 JP 2023016077
(43) Date of publication of application: 07.08.2024
(73) Proprietor: Seiko Epson Corporation, Tokyo 160-8801 (JP)
(72) Inventor: ZAKOJI, Makoto, Suwa-shi, 392-8502 (JP); IWAMA, Yuichiro, Suwa-shi, 392-8502 (JP)
(74) Representative: Lewis Silkin LLP

(56) References cited:
- WO-A1-2020/254455
- JP-A- 2020 122 832
- JP-A- 2022 155 935

## Description

The present application is based on, and claims priority from JP Application Serial Number 2023-016077, filed February 6,

### BACKGROUND

### 1. Technical Field

The present disclosure relates to a light source device and a projector.

### 2. Related Art

As a light source device used for a projector, there is proposed a light source device using fluorescence emitted from a phosphor when irradiating the phosphor with excitation light emitted from a light emitting element.

In International Patent Publication No. WO 2021/510912, there is disclosed a light source device provided with a light source for emitting blue excitation light, a phosphor rod for converting the excitation light into fluorescence, and a mirror for returning the fluorescence emitted from a surface at an opposite side to an exit surface of the phosphor rod.

In the light source device in WO 2021/510912, the mirror is disposed at a position distant from the phosphor rod. In this configuration, a proportion of the fluorescence reflected toward a direction deviated from the phosphor rod to the fluorescence emitted from the phosphor rod is high. Therefore, it is difficult to sufficiently return the fluorescence to the phosphor rod, and there is a problem that the loss of the fluorescence increases.

Although the description is hereinabove presented citing the light source device accompanied by a wavelength conversion as an example, there is substantially the same problem also in a light source device not accompanied by the wavelength conversion. It is desired to provide the light source device which is low in loss of the output light, and which is capable of emitting the light having a desired intensity.

WO 2020/254455 A1 relates to a light generating system, such as for use in a projector or for use in stage lighting, or for use for microscopy or endoscopy illumination.

### SUMMARY

In view of the problems described above, the light source device according to an aspect of the present disclosure includes a light emitting element configured to emit light, a light guide member configured to guide the light emitted from the light emitting element, a reflecting member having a reflecting surface configured to reflect the light proceeding through the light guide member, and a pressing member configured to press the reflecting member against the light guide member. The light guide member includes a first face and a second face located at respective sides opposite to each other in a first direction as a longitudinal direction of the light guide member, and a third face and a fourth face located at respective sides opposite to each other in a second direction in an imaginary plane perpendicular to the first direction. The light guided through the light guide member is emitted from the first face. The light emitting element is disposed so as to be opposed to the third face. The second face and the reflecting surface have contact with each other, and the pressing member is configured to press the reflecting member from a surface at an opposite side to the reflecting surface of the reflecting member toward the second face.

A projector according to an aspect of the present disclosure includes the light source device according to one of the aspects of the present disclosure, a light modulation device configured to modulate the light emitted from the light source device in accordance with image information, and a projection optical device configured to project the light modulated by the light modulation device.

### BRIEF DESCRIPTION OF THE DRAWINGS

FIG. 1 is a schematic configuration diagram of a projector according to an embodiment.
FIG. 2 is a schematic configuration diagram of a first illumination device according to the embodiment.
FIG. 3 is a perspective view of a light source device according to the embodiment.
FIG. 4 is a cross-sectional view of the light source device along the line IV-IV shown in FIG. 3.
FIG. 5 is a plan view as an enlarged view of the vicinity of a reflecting member.
FIG. 6 is a cross-sectional view of the light source device along the line VI-VI shown in FIG. 5.
FIG. 7 is a perspective view as an enlarged view of the vicinity of a pressing member.
FIG. 8 is a plan view as an enlarged view of the vicinity of the pressing member.
FIG. 9 is a diagram showing a problem of a related-art light source device.
FIG. 10 is a diagram showing another problem of the related-art light source device.
FIG. 11 is a diagram showing an advantage of the light source device according to the present embodiment.

### DESCRIPTION OF EXEMPLARY EMBODIMENTS

### First Embodiment

A first embodiment of the present disclosure will hereinafter be described using the drawings.

A projector according to the present embodiment is an example of a projector using liquid crystal panels as light modulation devices.

In the drawings described below, constituents are shown with respective dimensional scale ratios different from each other in some cases in order to make the constituents eye-friendly.

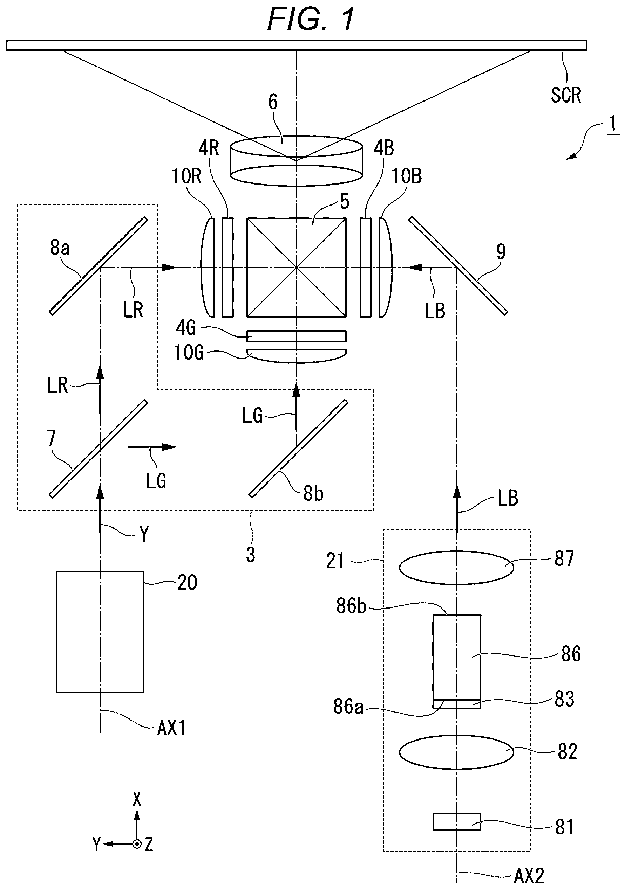

FIG. 1 is a diagram showing a schematic configuration of a projector 1 according to the present embodiment.

As shown in FIG. 1, the projector 1 according to the present embodiment is a projection-type image display device for displaying a color image on a screen (a projection target surface) SCR. The projector 1 is provided with three light modulation devices corresponding to respective colored light, namely red light LR, green light LG, and blue light LB.

The projector 1 is provided with a first illumination device 20, a second illumination device 21, a color separation optical system 3, a light modulation device 4R, a light modulation device 4G, a light modulation device 4B, a light combining element 5, and a projection optical device 6.

The first illumination device 20 emits fluorescence Y having a yellow color toward the color separation optical system 3. The second illumination device 21 emits the blue light LB toward the light modulation device 4B. The detailed configurations of the first illumination device 20 and the second illumination device 21 will be described later.

Hereinafter, in the drawings, the explanation will be presented using an XYZ orthogonal coordinate system as needed. A Z axis is an axis along a vertical direction of the projector 1. An X axis is an axis parallel to an optical axis AX1 of the first illumination device 20 and an optical axis AX2 of the second illumination device 21, and is an axis along a front-back direction of the projector 1. The Y axis is an axis perpendicular to the X axis and the Z axis, and is an axis along a horizontal direction of the projector 1. These representations are for explaining a layout relationship of the constituent members of the projector 1, but are not for limiting the installation posture and the direction of the projector 1. The optical axis AX1 of the first illumination device 20 is a central axis of the fluorescence Y emitted from the first illumination device 20. The optical axis AX2 of the second illumination device 21 is a central axis of the blue light LB emitted from the second illumination device 21.

The color separation optical system 3 separates the fluorescence Y having the yellow color emitted from the first illumination device 20 into the red light LR and the green light LG. The color separation optical system 3 is provided with a dichroic mirror 7, a first reflecting mirror 8a, and a second reflecting mirror 8b.

The dichroic mirror 7 separates the fluorescence Y into the red light LR and the green light LG. The dichroic mirror 7 transmits the red light LR, and at the same time, reflects the green light LG. The second reflecting mirror 8b is arranged in a light path of the green light LG. The second reflecting mirror 8b reflects the green light LG, which has been reflected by the dichroic mirror 7, toward the light modulation device 4G. The first reflecting mirror 8a is arranged in a light path of the red light LR. The first reflecting mirror 8a reflects the red light LR, which has been transmitted through the dichroic mirror 7, toward the light modulation device 4R.

Meanwhile, the blue light LB emitted from the second illumination device 21 is reflected by a reflecting mirror 9 toward the light modulation device 4B.

The configuration of the second illumination device 21 will hereinafter be described.

The second illumination device 21 is provided with a light source unit 81, a condenser lens 82, a diffuser plate 83, a rod lens 86, and a relay lens 87. The light source unit 81 is formed of at least one semiconductor laser. The light source unit 81 emits the blue light LB consisting of a laser beam. It should be noted that the light source unit 81 can also be formed of an LED for emitting blue light besides the semiconductor laser.

The condenser lens 82 is formed of a convex lens. The condenser lens 82 makes the blue light LB emitted from the light source unit 81 enter the diffuser plate 83 in a state of being substantially converged. The diffuser plate 83 diffuses the blue light LB emitted from the condenser lens 82 at a predetermined diffusion angle to generate the blue light LB having a substantially homogenous light distribution similarly to the fluorescence Y emitted from the first illumination device 20. As the diffuser plate 83, there is used, for example, frosted glass made of optical glass.

The blue light LB diffused by the diffuser plate 83 enters the rod lens 86. The rod lens 86 has a prismatic shape extending along a direction of the optical axis AX2 of the second illumination device 21. The rod lens 86 has a light incidence end plane 86a, and a light exit end surface 86b located at an opposite side to the light incidence end plane 86a. The diffuser plate 83 is fixed to the light incidence end plane 86a of the rod lens 86 via an optical adhesive (not shown). It is desirable to make the refractive index of the diffuser plate 83 and the refractive index of the rod lens 86 coincide with each other as precise as possible.

The blue light LB is emitted from the light exit end surface 86b in the state in which homogeneity of an illuminance distribution is enhanced by propagating through the rod lens 86 while being totally reflected. The blue light LB emitted from the rod lens 86 enters the relay lens 87. The relay lens 87 makes the blue light LB having been enhanced in homogeneity of the illuminance distribution by the rod lens 86 enter the reflecting mirror 9.

The shape of the light exit end surface 86b of the rod lens 86 is a rectangular shape substantially similar to a shape of an image formation area of the light modulation device 4B. Thus, the blue light LB emitted from the rod lens 86 efficiently enters the image formation area of the light modulation device 4B.

The light modulation device 4R modulates the red light LR in accordance with image information to form image light corresponding to the red light LR. The light modulation device 4G modulates the green light LG in accordance with the image information to form image light corresponding to the green light LG. The light modulation device 4B modulates the blue light LB in accordance with the image information to form image light corresponding to the blue light LB.

In each of the light modulation devices 4R, 4G, and 4B, there is used, for example, a transmissive liquid crystal panel. Further, at the incident side and the exit side of each of the liquid crystal panels, there are respectively arranged polarization plates (not shown). The polarization plates each transmit linearly-polarized light of a specific polarization direction.

At the incident side of the light modulation device 4R, there is arranged a field lens 10R. At the incident side of the light modulation device 4G, there is arranged a field lens 10G. At the incident side of the light modulation device 4B, there is arranged a field lens 10B. The field lens 10R collimates a principal ray of the red light LR entering the light modulation device 4R. The field lens 10G collimates a principal ray of the green light LG entering the light modulation device 4G. The field lens 10B collimates a principal ray of the blue light LB entering the light modulation device 4B.

The light combining element 5 combines the image light corresponding to the red light LR, the image light corresponding to the green light LG, and the image light corresponding to the blue light LB with each other in response to incidence of the image light emitted from the light modulation device 4R, the image light emitted from the light modulation device 4G, and the image light emitted from the light modulation device 4B, and then emits the image light thus combined toward the projection optical device 6. As the light combining element 5, there is used, for example, a cross dichroic prism.

The projection optical device 6 is constituted by a plurality of projection lenses. The projection optical device 6 projects the image light having been combined by the light combining element 5 toward the screen SCR in an enlarged manner. Thus, an image is displayed on the screen SCR.

A configuration of the first illumination device 20 will hereinafter be described.

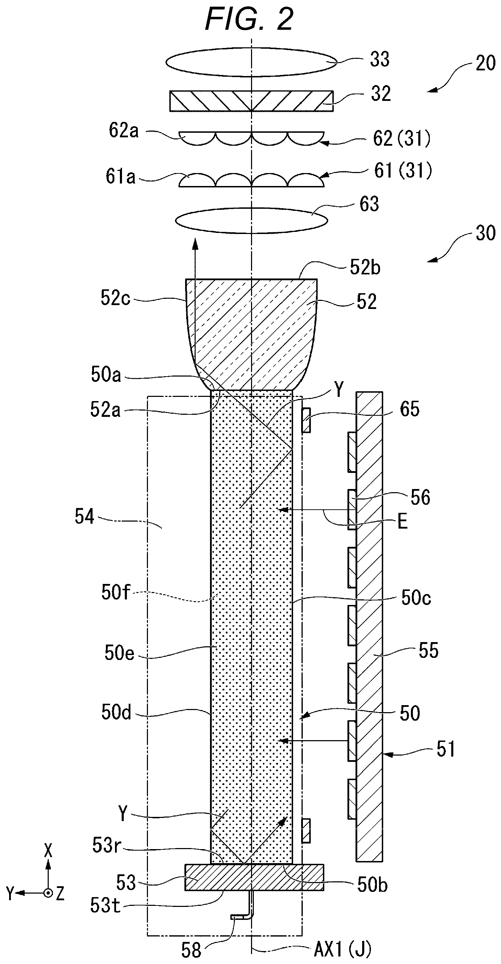

FIG. 2 is a schematic diagram showing a general configuration of the first illumination device 20.

As shown in FIG. 2, the first illumination device 20 is provided with a light source device 30, a collimating optical system 63, an integrator optical system 31, a polarization conversion element 32, and a superimposing optical system 33.

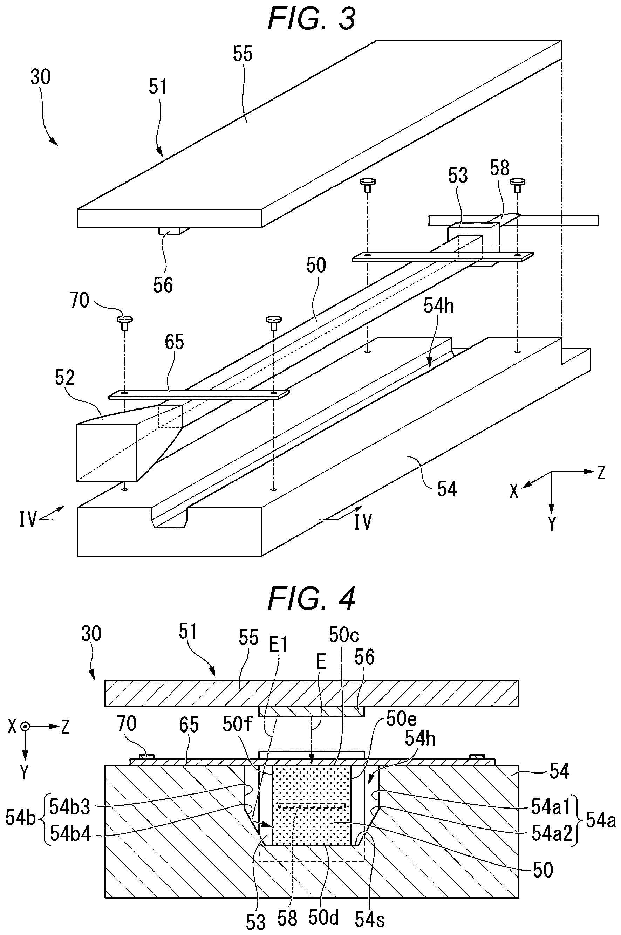

FIG. 3 is a perspective view of the light source device 30, and shows a state in which some of the members are exploded.

As shown in FIG. 2 and FIG. 3, the light source device 30 is provided with a wavelength conversion member 50, a light source unit 51, a support member 54, a fixation member 65, a reflecting mirror 53, a pressing member 58, and an angle conversion member 52. The light source unit 51 is provided with a substrate 55 and light emitting elements 56.

The reflecting mirror 53 in the present embodiment corresponds to a reflecting member in the appended claims. The wavelength conversion member 50 in the present embodiment corresponds to a light guide member in the appended claims.

The wavelength conversion member 50 has a quadrangular prismatic shape extending in the X-axis direction, and has six faces. A side extending in the X-axis direction of the wavelength conversion member 50 is longer than a side extending in the Y-axis direction and a side extending in the Z-axis direction. In other words, the X-axis direction corresponds to a longitudinal direction of the wavelength conversion member 50. The length of the side extending in the Y-axis direction and the length of the side extending in the Z-axis direction are equal to each other. In other words, a cross-sectional shape of the wavelength conversion member 50 cut by a plane perpendicular to the X-axis direction is a square. It should be noted that the cross-sectional shape of the wavelength conversion member 50 cut by the plane perpendicular to the X-axis direction can be a rectangle.

The wavelength conversion member 50 has a first face 50a and a second face 50b, a third face 50c and a fourth face50d, and a fifth face 50e and a sixth face 50f. The first face 50a and the second face 50b cross the longitudinal direction (the X-axis direction) of the wavelength conversion member 50, and are located at respective sides opposite to each other. The third face 50c and the fourth face 50d cross the first face 50a and the second face 50b, and are located at respective sides opposite to each other in the Y-axis direction in an imaginary plane perpendicular to the longitudinal direction. The fifth face 50e and the sixth face 50f cross the third face 50c and the fourth face 50d, and are located at respective sides opposite to each other in the Z-axis direction in the imaginary plane perpendicular to the longitudinal direction. In the following description, the third face 50c, the fourth face 50d, the fifth face 50e, and the sixth face 50f are collectively referred to as side surfaces in some cases. The X-axis direction in the present embodiment corresponds to a first direction in the appended claims. The Y-axis direction in the present embodiment corresponds to a second direction in the appended claims. The Z-axis direction in the present embodiment corresponds to a third direction in the appended claims.

The wavelength conversion member 50 includes a phosphor, and converts excitation light E having a first wavelength band into the fluorescence Y having a second wavelength band different from the first wavelength band. The excitation light E enters the wavelength conversion member 50 from the third face 50c. The fluorescence Y is guided inside the wavelength conversion member 50, and is then emitted from the first face 50a. The excitation light E in the present embodiment corresponds to first light in the appended claims. The fluorescence Y in the present embodiment corresponds to second light in the appended claims.

The wavelength conversion member 50 includes a ceramic phosphor made of a polycrystalline phosphor for wavelength-converting the excitation light E into the fluorescence Y. The second wavelength band which the fluorescence Y has is a yellow wavelength band of, for example, 490 through 750 nm. In other words, the fluorescence Y is yellow fluorescence including a red light component and a green light component.

It is also possible for the wavelength conversion member 50 to include a single-crystal phosphor instead of the polycrystalline phosphor. Alternatively, the wavelength conversion member 50 can also be formed of fluorescent glass. Alternatively, the wavelength conversion member 50 can also be formed of a material obtained by dispersing a number of phosphor particles in a binder made of glass or resin. The wavelength conversion member 50 made of such a material converts the excitation light E in the first wavelength band into the fluorescence Y in the second wavelength band.

Specifically, the material of the wavelength conversion member 50 includes, for example, an yttrium aluminum garnet (YAG) phosphor. Citing YAG:Ce including cerium (Ce) as an activator agent as an example, as the material of the wavelength conversion member 50, there is used a material obtained by mixing raw powder including constituent elements such as Y₂O₃, Al₂O₃, and CeO₃ to cause the solid-phase reaction, Y-Al-O amorphous particles obtained by a wet process such as a coprecipitation process or a sol-gel process, and YAG particles obtained by a gas-phase process such as a spray drying process, a flame heat decomposition process, or a thermal plasma process.

The light source unit 51 is provided with the light emitting elements 56 for emitting the excitation light E in the first wavelength band. The light emitting elements 56 are each formed of, for example, a light emitting diode (LED). The light emitting elements 56 are disposed so as to be opposed to the third face 50c of the wavelength conversion member 50. The light emitting elements 56 emit the excitation light E toward the third face 50c. The first wavelength band is a wavelength band from a blue color to a violet color of, for example, 400 nm through 480 nm, and has a peak wavelength of, for example, 445 nm. As described above, the light source unit 51 is disposed so as to be opposed to one of the four side surfaces along the longitudinal direction of the wavelength conversion member 50.

The substrate 55 supports the light emitting elements 56. The light source unit 51 is constituted by the light emitting elements 56 and the substrate 55 in the case of the present embodiment, but can also be provided with other optical members such as a light guide plate, a diffuser plate, or a lens besides the above. Although the plurality of light emitting elements 56 are used in the present embodiment, the number of the light emitting elements 56 is not particularly limited.

The support member 54 is disposed so as to surround the fourth face 50d, the fifth face 50e, and the sixth face 50f of the wavelength conversion member 50. The support member 54 supports the wavelength conversion member 50, and diffuses the heat generated in the wavelength conversion member 50 to release the heat to an outside space. Therefore, it is desirable for the support member 54 to be formed of a material which has predetermined strength and is high in thermal conductivity. As the material of the support member 54, there is used metal such as aluminum or stainless steel, and in particular, an aluminum alloy such as 6061 aluminum alloy is preferably used.

FIG. 4 is a cross-sectional view of the light source device 30 along the line IV-IV shown in FIG. 3.

As shown in FIG. 3 and FIG. 4, the support member 54 has a groove part 54h which extends in the longitudinal direction (the X-axis direction) of the wavelength conversion member 50, and which houses the wavelength conversion member 50. The support member 54 has the groove part 54h, and therefore, a cross-sectional surface perpendicular to the X-axis direction of the support member 54 has a U-shape. The groove part 54h has a support surface 54s, a first wall surface 54a, and a second wall surface 54b.

The support surface 54s corresponds to a bottom surface of the groove part 54h, and has contact with the fourth face 50d of the wavelength conversion member 50. The first wall surface 54a corresponds to one of side surfaces of the groove part 54h, and is opposed to the fifth face 50e of the wavelength conversion member 50, and is separated from the fifth face 50e. The second wall surface 54b corresponds to the other of the side surfaces of the groove part 54h, and is opposed to the sixth face 50f of the wavelength conversion member 50, and is separated from the sixth face 50f. In other words, a gap is disposed between the first wall surface 54a and the fifth face 50e of the wavelength conversion member 50. A gap is disposed between the second wall surface 54b and the sixth face 50f of the wavelength conversion member 50.

The first wall surface 54a has a first portion 54a1 located at the third face 50c side, and a second portion 54a2 located at the support surface 54s side. The first portion 54a1 extends in a direction perpendicular to the support surface 54s, namely in parallel to the X-Y plane. The second portion 54a2 is tilted so as to come closer to the fifth face 50e in a direction from the first portion 54a1 toward the support surface 54s. In other words, a distance between the second portion 54a2 and the fifth face 50e at the support surface 54s side is shorter than a distance between the second portion 54a2 and the fifth face 50e at the first portion 54a1 side.

The second wall surface 54b has a third portion 54b3 located at the third face 50c side, and a fourth portion 54b4 located at the support surface 54s side. The third portion 54b3 extends in a direction perpendicular to the support surface 54s, namely in parallel to the X-Y plane. The fourth portion 54b4 is tilted so as to come closer to the sixth face 50f in a direction from the third portion 54b3 toward the support surface 54s. In other words, a distance between the fourth portion 54b4 and the sixth face 50f at the support surface 54s side is shorter than a distance between the fourth portion 54b4 and the sixth face 50f at the third portion 54b3 side.

Each of the support surface 54s, the first wall surface 54a, and the second wall surface 54b is formed of a surface of metal such as aluminum or stainless steel as the constituent material of the support member 54. More specifically, each of the support surface 54s, the first wall surface 54a, and the second wall surface 54b is formed of a processed surface obtained by performing mirror finish on the metal surface described above. Therefore, each of the support surface 54s, the first wall surface 54a, and the second wall surface 54b has light reflectivity, and reflects the excitation light E having entered the support surface 54s, the first wall surface 54a, or the second wall surface 54b. It should be noted that each of the support surface 54s, the first wall surface 54a, and the second wall surface 54b can be formed of another metal film or another dielectric multilayer film formed on a surface of metal such as aluminum or stainless steel.

Most of the excitation light E emitted from the light emitting elements 56 enters the wavelength conversion member 50 from the third face 50c. Further, the excitation light E1 which is emitted from the light emitting elements 56, and then enters the gap between the first wall surface 54a and the fifth face 50e, or the gap between the second wall surface 54b and the sixth face 50f is reflected by the first wall surface 54a or the second wall surface 54b, and then enters the wavelength conversion member 50 from the fifth face 50e or the sixth face 50f. In the case of the present embodiment, since the second portion 54a2 and the fourth portion 54b4 tilted with respect to the X-Y plane are disposed, it is possible to increase the proportion of the excitation light E1 which enters the fifth face 50e or the sixth face 50f to the excitation light E1 which is reflected by the first wall surface 54a or the second wall surface 54b.

As shown in FIG. 4, the fixation member 65 is disposed so as to be opposed to the third face 50c of the wavelength conversion member 50. The fixation member 65 is formed of, for example, a plate spring which is elastically deformable. As shown in FIG. 3, the fixation member 65 is arranged so as to extend in a direction (the Z-axis direction) perpendicular to the longitudinal direction of the wavelength conversion member 50, and both ends of the fixation member 65 are fixed to the support member 54 with screws 70. The fixation member 65 fixes the wavelength conversion member 50 to the support member 54 in a state of being pressed from the third face 50c toward the support surface 54s of the support member 54. Thus, the wavelength conversion member 50 surely adheres to the support member 54. It should be noted that it is sufficient for the fixation member 65 to be able to press the wavelength conversion member 50 from the third face 50c toward the support surface 54s of the support member 54, and it is possible to adopt, for example, a protruding part which is provided to the substrate 55 of the light source unit 51, and protrudes toward the wavelength conversion member 50, instead of the configuration of the present embodiment.

As shown in FIG. 2, the reflecting mirror 53 is disposed so as to have contact with the second face 50b of the wavelength conversion member 50. The reflecting mirror 53 has a reflecting surface 53r for reflecting the fluorescence Y proceeding through the wavelength conversion member 50, and an outer surface 53t at an opposite side to the reflecting surface 53r. The reflecting mirror 53 reflects the fluorescence Y which has been guided inside the wavelength conversion member 50, and which has reached the second face 50b, with the reflecting surface 53r. The reflecting mirror 53 is constituted by a substrate such as glass, and a reflecting film such as a metal film or a dielectric multilayer film formed on one surface of the substrate. In other words, the reflecting surface 53r is constituted by a reflecting film formed of the metal film, the dielectric multilayer film, or the like.

When the excitation light E emitted from the light emitting elements 56 enters the wavelength conversion member 50, the phosphor included in the wavelength conversion member 50 is excited, and the fluorescence Y is emitted from an arbitrary light emitting point. The fluorescence Y proceeds from the arbitrary light emitting point toward all directions, but the fluorescence Y having proceeded toward the four side surfaces 50c, 50d, 50e, and 50f repeats total reflection at a plurality of positions on the side surfaces 50c, 50d, 50e, and 50f to proceed toward the first face 50a or the second face 50b. The fluorescence Y proceeding toward the first face 50a enters the angle conversion member 52. The fluorescence Y having proceeded toward the second face 50b is reflected by the reflecting mirror 53, and then proceeds toward the first face 50a.

A part of the excitation light E which has not been used for the excitation of the phosphor out of the excitation light E having entered the wavelength conversion member 50 is reflected by a member on the periphery of the wavelength conversion member 50 including the light emitting elements 56 of the light source unit 51, or the reflecting mirror 53 disposed on the second face 50b. Therefore, the part of the excitation light E is confined inside the wavelength conversion member 50 to be reused.

The pressing member 58 presses the reflecting mirror 53 from the outer surface 53t side toward the second face 50b of the wavelength conversion member 50. Thus, the reflecting surface 53r of the reflecting mirror 53 adheres to the second face 50b of the wavelength conversion member 50. The detailed configuration of the pressing member 58 will be described later.

The angle conversion member 52 is disposed at the light exit side of the first face 50a of the wavelength conversion member 50. The angle conversion member 52 is formed of, for example, a compound parabolic concentrator (CPC). The angle conversion member 52 has a plane of incidence of light 52a which the fluorescence Y emitted from the wavelength conversion member 50 enters, a light exit surface 52b for emitting the fluorescence Y, and a side surface 52c for reflecting the fluorescence Y having entered the side surface 52c, toward the light exit surface 52b.

The cross-sectional area perpendicular to an optical axis J of the angle conversion member 52 increases in a direction from the plane of incidence of light 52a toward the light exit surface 52b. Therefore, the area of the light exit surface 52b is larger than the area of the plane of incidence of light 52a. An axis which passes through the center of the light exit surface 52b and the center of the plane of incidence of light 52a, and which is parallel to the X axis, is defined as the optical axis J of the angle conversion member 52. The optical axis J of the angle conversion member 52 coincides with the optical axis AX1 of the first illumination device 20.

The fluorescence Y having entered the angle conversion member 52 changes the direction so as to approximate to a direction parallel to the optical axis J when the fluorescence Y is totally reflected by the side surface 52c while proceeding inside the angle conversion member 52. In such a manner, the angle conversion member 52 converts an exit angle distribution of the fluorescence Y emitted from the first face 50a of the wavelength conversion member 50. Specifically, the angle conversion member 52 makes a maximum exit angle of the fluorescence Y on the light exit surface 52b smaller than a maximum incident angle of the fluorescence Y on the plane of incidence of light 52a.

In general, since an etendue of light defined by a product of the area of a light exit region and a solid angle (the maximum exit angle) of the light is conserved, the etendue of the fluorescence Y is also conserved before and after the transmission through the angle conversion member 52. As described above, the angle conversion member 52 has the configuration in which the area of the light exit surface 52b is made larger than the area of the plane of incidence of light 52a. Therefore, in view of the conservation of the etendue, it is possible for the angle conversion member 52 to make the maximum exit angle of the fluorescence Y on the light exit surface 52b smaller than the maximum incident angle of the fluorescence Y on the plane of incidence of light 52a.

The angle conversion member 52 is fixed to the wavelength conversion member 50 via an optical adhesive (not shown) so that the plane of incidence of light 52a is opposed to the first face 50a of the wavelength conversion member 50. Specifically, the angle conversion member 52 and the wavelength conversion member 50 have contact with each other via the optical adhesive, and no air gap (no air layer) is disposed between the angle conversion member 52 and the wavelength conversion member 50. When an air gap is supposedly disposed between the angle conversion member 52 and the wavelength conversion member 50, the fluorescence Y having entered the plane of incidence of light 52a of the angle conversion member 52 at an angle no smaller than a critical angle out of the fluorescence Y having reached the plane of incidence of light 52a of the angle conversion member 52 is totally reflected by the plane of incidence of light 52a, and fails to enter the angle conversion member 52. In contrast, when such an air gap is not disposed between the angle conversion member 52 and the wavelength conversion member 50 as in the present embodiment, it is possible to reduce the fluorescence Y which cannot enter the angle conversion member 52. From this point of view, it is desirable to make the refractive index of the angle conversion member 52 and the refractive index of the wavelength conversion member 50 coincide with each other as precisely as possible.

A taper rod having, for example, a truncated quadrangular pyramid-like shape can be used as the angle conversion member 52 instead of the CPC. Even when using the taper rod as the angle conversion member 52, it is also possible to obtain substantially the same advantages as those obtained when using the CPC. It should be noted that the light source device 30 is not necessarily required to be provided with the angle conversion member 52.

The collimating optical system 63 formed of a collimator lens and so on is disposed between the light source device 30 and the integrator optical system 31. The collimating optical system 63 makes the angle distribution of the fluorescence Y emitted from the angle conversion member 52 smaller, and then makes the fluorescence Y high in parallelism enter the integrator optical system 31. It should be noted that the collimating optical system 63 is not required to be disposed when the parallelism of the fluorescence Y emitted from the angle conversion member 52 is sufficiently high.

The integrator optical system 31 has a first lens array 61 and a second lens array 62. The integrator optical system 31 functions as a homogenous illumination optical system for homogenizing an intensity distribution of the fluorescence Y emitted from the light source device 30 in each of the light modulation devices 4R, 4G as the illumination target areas in cooperation with the superimposing optical system 33. The fluorescence Y emitted from the collimating optical system 63 enters the first lens array 61. The first lens array 61 constitutes the integrator optical system 31 together with the second lens array 62 disposed in a posterior stage of the light source device 30.

The first lens array 61 has a plurality of first lenses 61a. The plurality of first lenses 61a are arranged in a matrix in a plane parallel to the Y-Z plane perpendicular to the optical axis AX1 of the first illumination device 20. The plurality of first lenses 61a divide the fluorescence Y emitted from the angle conversion member 52 into a plurality of partial light beams. A shape of each of the first lenses 61a is a rectangular shape substantially similar to a shape of each of the image formation areas of the light modulation devices 4R, 4G. Thus, each of partial light beams emitted from the first lens array 61 efficiently enters each of the image formation areas of the light modulation devices 4R, 4G.

The fluorescence Y emitted from the first lens array 61 proceeds toward the second lens array 62. The second lens array 62 is arranged so as to be opposed to the first lens array 61. The second lens array 62 has a plurality of second lenses 62a corresponding respectively to the plurality of first lenses 61a of the first lens array 61. The second lens array 62 forms each of images of the plurality of first lenses 61a of the first lens array 61 in the vicinity of each of the image formation areas of the light modulation devices 4R, 4G in cooperation with the superimposing optical system 33. The plurality of second lenses 62a are arranged in a matrix in a plane parallel to the Y-Z plane perpendicular to the optical axis AX1 of the first illumination device 20.

Each of the first lenses 61a of the first lens array 61 and each of the second lenses 62a of the second lens array 62 have respective sizes the same as each other in the present embodiment, but can have respective sizes different from each other. Further, the first lenses 61a of the first lens array 61 and the second lenses 62a of the second lens array 62 are arranged at positions where respective optical axes coincide with each other in the present embodiment, but can be arranged in a state in which the axes are shifted from each other.

The polarization conversion element 32 converts the polarization direction of the fluorescence Y emitted from the second lens array 62. Specifically, the polarization conversion element 32 converts each of the partial light beams of the fluorescence Y which are divided by the first lens array 61, and which are emitted from the second lens array 62, into linearly polarized light.

The polarization conversion element 32 has a polarization splitting layer (not shown) for transmitting one of the linearly polarized components included in the fluorescence Y emitted from the light source device 30 without modification while reflecting the other of the linearly polarized components toward a direction perpendicular to the optical axis AX1, a reflecting layer (not shown) for reflecting the other of the linearly polarized components reflected by the polarization splitting layer, toward a direction parallel to the optical axis AX1, and a phase difference layer (not shown) for converting the other of the linearly polarized components reflected by the reflecting layer into the one of the linearly polarized components.

Characteristic points of the light source device 30 according to the present embodiment will hereinafter be described.

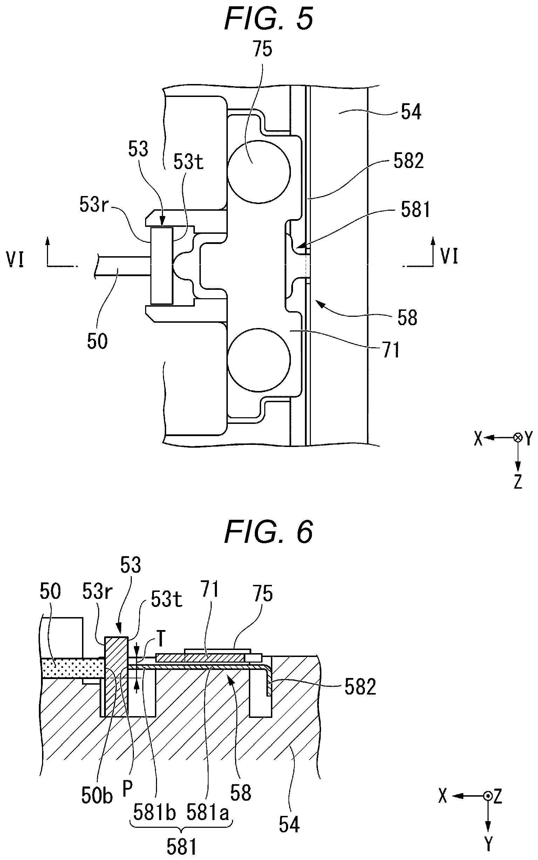

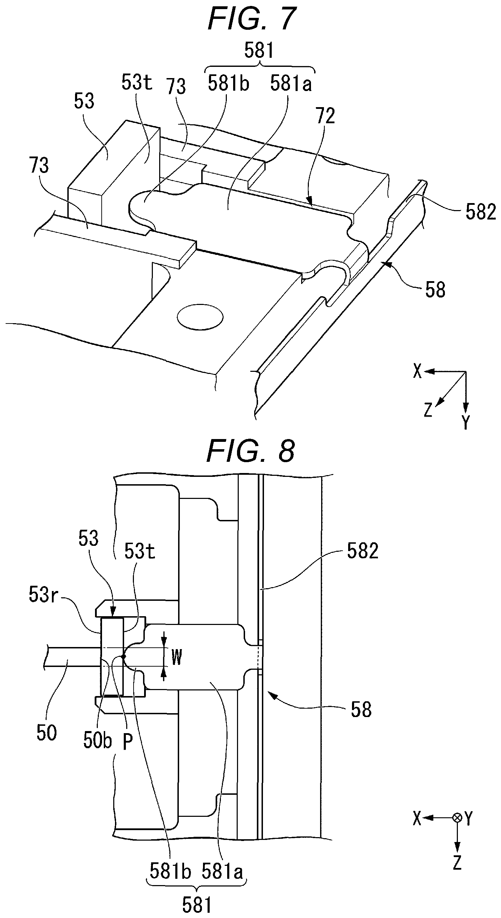

FIG. 5 is a plan view as an enlarged view of the vicinity of the reflecting mirror 53. FIG. 6 is a cross-sectional view of the light source device 30 along the line VI-VI shown in FIG. 5. FIG. 7 is a perspective view as an enlarged view of the vicinity of the pressing member 58. FIG. 8 is a plan view as an enlarged view of the vicinity of the pressing member 58. In FIG. 7 and FIG. 8, in order to make the pressing member 58 eye-friendly, there is shown a state in which a holding member 71 is detached.

As shown in FIG. 7 and FIG. 8, the pressing member 58 has a pressing part 581 and an elastic part 582. In the case of the present embodiment, the pressing member 58 is manufactured using a plate-like metal member having elasticity, and the pressing part 581 and the elastic part 582 are integrally formed. According to this configuration, it is possible to surely press the reflecting mirror 53 with the pressing part 581, and at the same time, it is possible to provide the pressing part 581 with a pressing force with the elastic part 582.

The pressing part 581 has contact with the outer surface 53t of the reflecting mirror 53 to press the reflecting mirror 53. As described above, the pressing part 581 is formed of a plate-like member of which the thickness in the Y-axis direction is smaller than the width in the Z-axis direction. The pressing part 581 has a pressing part main body 581a, and a contact part 581b which extends from the pressing part main body 581a, and which has contact with the reflecting mirror 53. The planar shape of the pressing part main body 581a viewed from the Y-axis direction is a substantially rectangular shape. The contact part 581b is flared outward from substantially the center of a short side of the pressing part main body 581a, and the tip thereof has a semicircular shape.

Due to the configuration described above, the contact part 581b has contact with the outer surface 53t of the reflecting mirror 53 with an extremely small area at the center of a semicircular arc. Therefore, the width in the Z-axis direction of the contact part 581b at a contact part P with the reflecting mirror 53 is sufficiently smaller than the width in the Z-axis direction of the pressing part main body 581a. In other words, the contact part 581b makes a substantially point contact with the outer surface 53t of the reflecting mirror 53. It should be noted that the shape of the contact part 581b can be, for example, a triangular shape besides the semicircular shape, and is preferably a shape making a substantially point contact with the outer surface 53t of the reflecting mirror 53. According to this configuration, even when the orientation of the pressing part 581 is somewhat tilted with respect to the reflecting mirror 53, it is possible for the tip of the contact part 581b to always press the reflecting mirror 53 at right angle against the outer surface 53t. Thus, it is possible to prevent the reflecting mirror 53 from tilting with respect to the wavelength conversion member 50.

The elastic part 582 is a portion which is coupled to the pressing part 581, and is made elastically deformable and elastically restorable. The elastic part 582 extends long in the Z-axis direction in a state of being folded at substantially right angle from the pressing part 581. Specifically, the elastic part 582 is formed of a plate-like member of which the thickness in the X-axis direction is sufficiently smaller than the width in the Z-axis direction and the height in the Y-axis direction. Therefore, the flexibility of the elastic part 582 in the X-axis direction is sufficiently higher than the flexibility of the elastic part 582 in the Y-axis direction and the Z-axis direction. Thus, the elastic part 582 is elastically deformable and elastically restorable in the X-axis direction, and functions as a plate spring for moving the pressing part 581 along the X-axis direction. Although not shown in the drawings, both ends of the elastic part 582 are fixed to the support member 54 with fixation devices such as screws. The fixation with the screws or the like is not a limitation, and it is sufficient for the both ends of the elastic part 582 to be regulated in displacement toward the -X-axis direction. This is because, as described later in detail, the pressing part 581 is regulated in the Y-axis direction and the Z-axis direction with the holding member 71 and a regulatory groove part 72. Dimensions of parts of the pressing member 58 and an attachment position of the elastic part 582 are set in the state in which the pressing part 581 can always press the reflecting mirror 53.

The reflecting mirror 53 and the pressing member 58 are formed of respective members separated from each other. According to this configuration, since the angle at which the reflecting mirror 53 and the pressing member 58 have contact with each other can freely change, it is possible to prevent the reflecting mirror 53 from tilting with respect to the wavelength conversion member 50 due to the influence of the tilt of the pressing member 58 even when the orientation of the pressing member 58 is somewhat tilted with respect to the reflecting mirror 53. The area of the reflecting surface 53r of the reflecting mirror 53 is larger than the area of the second face 50b of the wavelength conversion member 50. Thus, the circumferential edge part of the reflecting mirror 53 protrudes to the outside of the second face 50b of the wavelength conversion member 50. Thus, even when misalignment between the reflecting mirror 53 and the pressing member 58 occurs, it is possible to surely make the reflecting surface 53r of the reflecting mirror 53 have contact with the second face 50b of the wavelength conversion member 50.

As shown in FIG. 8, when viewed from the Y-axis direction, the contact position P of the contact part 581b with respect to the reflecting mirror 53 is located within a range of the width W in the Z-axis direction of the wavelength conversion member 50. As shown in FIG. 6, when viewed from the Z-axis direction, the contact position P of the contact part 581b with respect to the reflecting mirror 53 is located within a range of the height T in the Y-axis direction of the wavelength conversion member 50. In other words, the contact position P of the contact part 581b with respect to the reflecting mirror 53 is located within a range of a region opposed to the second face 50b of the wavelength conversion member 50 out of the outer surface 53t of the reflecting mirror 53. According to this configuration, when the pressing member 58 presses the reflecting mirror 53, the pressing force reaches the second face 50b of the wavelength conversion member 50 via the reflecting mirror 53, and therefore, the reflecting surface 53r is prevented from tilting with respect to the second face 50b, and the entire area of the reflecting surface 53r has contact with the entire area of the second face 50b.

As shown in FIG. 5 and FIG. 6, there is disposed the holding member 71 at an opposite side to the support member 54 of the pressing member 58. The holding member 71 extends in the Z-axis direction, and at the same time, a central portion thereof has a shape of covering the pressing part main body 581a. Both end portions in the Z-axis direction of the holding member 71 are fixed to the support member 54 with screws 75. The holding member 71 regulates the translation of the pressing member 58 in the Y-axis direction. The holding member 71 is disposed at a slight distance from the pressing member 58. In other words, since a minute gap exists between the holding member 71 and the pressing member 58, there is no chance for the holding member 71 to hinder the translation of the pressing member 58 toward the X-axis direction. The holding member 71 in the present embodiment corresponds to a first regulatory part in the appended claims.

As shown in FIG. 7, in the support member 54, the regulatory groove part 72 formed of a groove part extending in the X-axis direction is disposed at a position overlapping the pressing part main body 581a when viewed from the Y-axis direction. The width in the Z-axis direction of the regulatory groove part 72 is slightly larger than the width in the Z-axis direction of the pressing part main body 581a, and the depth in the Y-axis direction of the regulatory groove part 72 is larger than the plate thickness in the Y-axis direction of the pressing part main body 581a. Therefore, the pressing part main body 581a is housed inside the regulatory groove part 72. According to this configuration, when the pressing member 58 is urged to move in the Z-axis direction, the pressing member 58 is not allowed to move since the pressing part main body 581a has contact with the side wall of the regulatory groove part 72. In such a manner, the regulatory groove part 72 regulates the translation of the pressing member 58 in the Z-axis direction. The regulatory groove part 72 in the present embodiment corresponds to a second regulatory part in the appended claims.

Since the holding member 71 and the regulatory groove part 72 are disposed, the translation in the Y-axis direction and the translation in the Z-axis direction of the pressing member 58 are both regulated. As described above, by regulating the translation in the imaginary plane perpendicular to the X-axis direction of the pressing member 58, there is kept the state in which the contact position P of the contact part 581b with respect to the reflecting mirror 53 is located within the range of the region opposed to the second face 50b of the wavelength conversion member 50 out of the outer surface 53t of the reflecting mirror 53 without the contact position P being significantly translated.

As shown in FIG. 7, in the support member 54, regulatory wall parts 73 opposed to end surfaces of the reflecting mirror 53 are disposed at both sides of the reflecting mirror 53 in the Z-axis direction. A distance between the two regulatory wall parts 73 is slightly larger than the width in the Z-axis direction of the reflecting mirror 53. According to this configuration, when the reflecting mirror 53 is urged to move in the Z-axis direction, the reflecting mirror 53 is not allowed to move since the reflecting mirror 53 has contact with the regulatory wall part 73. In such a manner, the regulatory wall parts 73 regulate the translation of the reflecting mirror 53 in the Z-axis direction. Further, although not shown in the drawings, the translation of the reflecting mirror 53 in the Y-axis direction is regulated by the support member 54 and the substrate 55 of the light source unit 51. Thus, it is prevented that the position of the reflecting mirror 53 is shifted in a direction perpendicular to the longitudinal direction of the wavelength conversion member 50 to make the reflecting mirror 53 run off the second face 50b of the wavelength conversion member 50. The regulatory wall parts 73, the support member 54, and the substrate 55 of the light source unit 51 in the present embodiment correspond to a third regulatory part in the appended claims.

The pressing force of the pressing member 58 is set so as not to press the reflecting mirror 53 with an unnecessarily strong force. Specifically, the force of the pressing member 58 pressing the reflecting mirror 53 in the X-axis direction is defined as F, the force of the wavelength conversion member 50 pressing the support member 54 in the Y-axis direction with the fixation member 65 is defined as N, and the friction coefficient between the fourth face 40d of the wavelength conversion member 50 and the support surface 54s of the support member 54 is defined as µ. In this case, the magnitude of the drag generated when the pressing member 58 presses the reflecting mirror 53 in the X-axis direction is obtained as N×µ. In order to prevent the wavelength conversion member 50 from moving in the X-axis direction when the pressing member 58 presses the reflecting mirror 53, it is sufficient for the pressing force to be weaker than the drag. In other words, it is sufficient to fulfill the relationship of F<N×µ.

When the wavelength conversion member 50 moves in the X-axis direction, the distance between the angle conversion member 52 and the optical system in the posterior stage varies, and therefore, there is a possibility that there occurs the fluorescence Y which fails to enter the optical system in the posterior stage. In contrast, according to the configuration described above, since the wavelength conversion member 50 does not move in the X-axis direction, it is possible to suppress the loss of the fluorescence Y due to the translation in the X-axis direction of the wavelength conversion member 50. Further, since no mechanical stress is applied to the angle conversion member 52 unlike the configuration in which the translation in the X-axis direction of the wavelength conversion member 50 is regulated by physically fixing the angle conversion member 52, it is possible to extract the fluorescence Y having the desired intensity.

### Advantages of First Embodiment

The light source device 30 according to the present embodiment is provided with the light emitting elements 56 for emitting the excitation light E, the wavelength conversion member 50 for converting the excitation light E emitted from the light emitting elements 56 into the fluorescence Y and then emitting the fluorescence Y, the reflecting mirror 53 having the reflecting surface 53r for reflecting the fluorescence Y proceeding through the wavelength conversion member 50, and the pressing member 58 for pressing the reflecting mirror 53 toward the wavelength conversion member 50. The wavelength conversion member 50 has the first face 50a and the second face 50b located at the respective sides opposed to each other in the X-axis direction, and the third face 50c and the fourth face 50d located at the respective sides opposed to each other in the Y-axis direction. The fluorescence Y guided in the wavelength conversion member 50 is emitted from the first face 50a. The light emitting elements 56 are disposed so as to be opposed to the third face 50c. The second face 50b and the reflecting surface 53r have contact with each other, and the pressing member 58 presses the reflecting mirror 53 from the outer surface 53t of the reflecting mirror 53 toward the second face 50b.

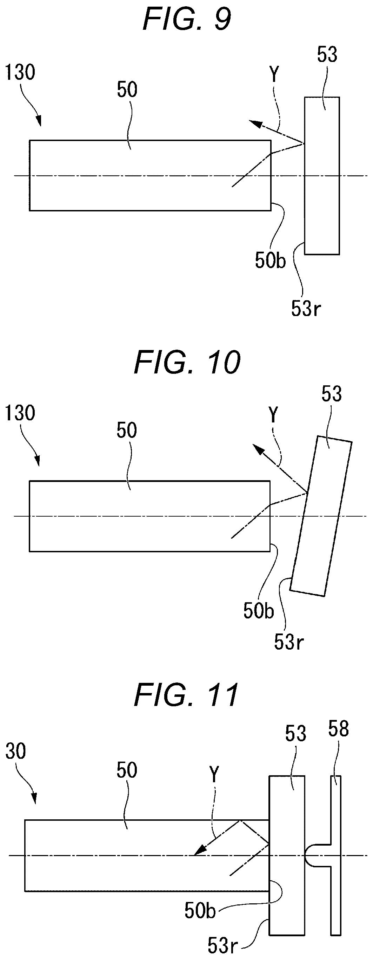

As shown in FIG. 9, in the related-art light source device 130, the reflecting mirror 53 is disposed at a position distance from the wavelength conversion member 50. In this configuration, even when a part of the fluorescence Y having reached the second face 50b of the wavelength conversion member 50 is emitted from the second face 50b and is then reflected by the reflecting mirror 53, the proportion of the fluorescence Y proceeding in a direction of running off the wavelength conversion member 50 is high, and the loss of the fluorescence Y increases.

Further, as shown in FIG. 10, when the reflecting mirror 53 tilts with respect to the second face 50b of the wavelength conversion member 50, the proportion of the fluorescence Y reflected by the reflecting mirror 53 and then proceeding in the direction of running off the wavelength conversion member 50 further rises, and the loss of the fluorescence Y further increases.

To cope with the problem described above, according to the light source device 30 related to the present embodiment, as shown in FIG. 11, the reflecting mirror 53 is pressed by the pressing member 58 against the second face 50b of the wavelength conversion member 50. Therefore, the fluorescence Y having reached the second face 50b is reflected by the reflecting surface 53r, and then proceeds toward the first face 50a while repeating the total reflection inside the wavelength conversion member 50. Thus, it is possible to suppress the loss of the fluorescence Y to a sufficiently low level, and thus, it is possible to obtain the fluorescence Y having the desired intensity.

As a method of making the reflecting mirror have contact with the wavelength conversion member, it is conceivable that, for example, the reflecting mirror is fixed at a specific position in the support member to thereby make the reflecting mirror have contact with the wavelength conversion member. However, since the heat is generated due to the wavelength conversion of the excitation light into the fluorescence, and the temperature of the wavelength conversion member changes, the wavelength conversion member expands or contracts in the longitudinal direction due to the change in temperature. Therefore, when the reflecting mirror is supposedly fixed at the specific position in the support member, there is a possibility that the wavelength conversion member and the reflecting mirror become separated from each other when the wavelength conversion member contracts due to, for example, the change in temperature. In contrast, according to the light source device 30 related to the present embodiment, since the reflecting mirror 53 is always pressed against the wavelength conversion member 50, even when the wavelength conversion member 50 contracts, the reflecting mirror 53 moves following the contraction of the wavelength conversion member 50, and the state of having contact with the wavelength conversion member 50 is kept. On the other hand, even when the wavelength conversion member 50 expands, the pressing member 58 makes the elastic deformation, and therefore, no failure occurs. Thus, it is possible to stably obtain the fluorescence Y having the desired intensity.

As another method of making the reflecting mirror have contact with the wavelength conversion member, it is conceivable to bond the reflecting mirror to the wavelength conversion member using an adhesive. However, in this configuration, there is a problem that a part of the fluorescence is absorbed by the adhesive, and thus, the loss of the fluorescence increases. Further, there is a problem that when the temperature of the wavelength conversion member rises, a deflection occurs in the bonded interface due to a difference between the thermal expansion coefficient of the wavelength conversion member and the thermal expansion coefficient of the reflecting mirror. In contrast, according to the light source device 30 related to the present embodiment, since no adhesive intervenes between the reflecting mirror 53 and the wavelength conversion member 50, and the reflecting mirror 53 and the wavelength conversion member 50 can individually expand or contract, it is possible to resolve the problem described above.

The projector 1 according to the present embodiment is equipped with the light source device 30 according to the present embodiment, and is therefore excellent in display quality.

In the light source device according to the embodiment described above, there is cited the example in which the reflecting mirror and the pressing member are formed of the respective members separated from each other, but instead of this configuration, it is possible to adopt a configuration in which the reflecting mirror and the pressing member are formed of an integrated member. According to this configuration, it is possible to reduce the number of components of the light source device, and thus, it is possible to simplify the assembling process of the light source device.

In the embodiment described above, there is cited the example in which the second face of the wavelength conversion member and the reflecting surface of the reflecting mirror have direct contact with each other, but it is possible to make a member having a light transmissive property other than the adhesive intervene between the second face of the wavelength conversion member and the reflecting surface of the reflecting mirror. In other words, the second face of the wavelength conversion member and the reflecting surface of the reflecting mirror are not necessarily required to have direct contact with each other. Further, the pressing member has the plate spring structure in the embodiment described above, but it is sufficient for the pressing member to be a member capable of exerting the elasticity in the X-axis direction, and it is possible for the pressing member to have other spring structures such as a coil spring.

In the embodiment described above, each of the wall surfaces of the groove part of the support member has a portion perpendicular to the support surface and a portion tilted with respect to the support surface, but the shape of the groove part is not particularly limited, and for example, all of the areas of the wall surfaces of the groove part can be perpendicular to the support surface. Further, the wall surfaces of the groove part can be curved.

In the embodiment described above, there is cited an example in which the present disclosure is applied to the light source device provided with the wavelength conversion member, but instead of this configuration, it is possible to apply the present disclosure to a light source device which propagates the incident light without the wavelength conversion, and then emits the incident light controlling, for example, the angular distribution. In that case, the wavelength conversion member of the embodiment described above is replaced with a light guide member, and the light emitted from the light emitting element is emitted from the angle conversion member as light in an unchanged wavelength band.

Besides the above, the specific descriptions of the shape, the number, the arrangement, the material, and so on of the constituents of the light source device and the projector are not limited to those in the embodiment described above, and can arbitrarily be modified. Further, although in the embodiment described above, there is described the example of installing the light source device according to the present disclosure in the projector using the liquid crystal panels, the example is not a limitation. The light source device according to the present disclosure can also be applied to a projector using digital micromirror devices as the light modulation devices. Further, the projector is not required to have a plurality of light modulation devices, and can be provided with just one light modulation device.

Although in the embodiment described above, there is described the example of applying the light source device according to the present disclosure to the projector, the example is not a limitation. The light source device according to the present disclosure can also be applied to lighting equipment, a headlight of a vehicle, and so on.

## Claims

1. A light source device comprising:
a light emitting element configured to emit light;
a light guide member configured to guide the light emitted from the light emitting element;
a reflecting member having a reflecting surface configured to reflect the light proceeding through the light guide member; and
a pressing member configured to press the reflecting member against the light guide member, wherein
the light guide member includes
a first face and a second face located at respective sides opposite to each other in a first direction as a longitudinal direction of the light guide member, and
a third face and a fourth face located at respective sides opposite to each other in a second direction in an imaginary plane perpendicular to the first direction,
the light guided through the light guide member is emitted from the first face,
the light emitting element is disposed so as to be opposed to the third face,
the second face and the reflecting surface have contact with each other, and
the pressing member is configured to press the reflecting member from a surface at an opposite side to the reflecting surface of the reflecting member toward the second face.

2. The light source device according to Claim 1, wherein
the pressing member includes
a pressing part configured to press the reflecting member, and
an elastic part which is coupled to the pressing part, and which is elastically deformable and elastically restorable, and
flexibility of the elastic part in the first direction is higher than flexibility of the elastic part in the second direction and a third direction perpendicular to the second direction in the imaginary plane.

3. The light source device according to Claim 1, wherein
the reflecting member and the pressing member are formed of respective members separated from each other.

4. The light source device according to Claim 3, wherein
the pressing part has a pressing part main body, and a contact part which extends from the pressing part main body, and which is configured to have contact with the reflecting member, and
a contact position of the contact part with respect to the reflecting member is located within a range of a region opposed to the second face of the light guide member out of a surface at a side opposite to the reflecting surface of the reflecting member.

5. The light source device according to Claim 4, further comprising:
a first regulatory part configured to regulate a translation of the pressing member in the second direction.

6. The light source device according to Claim 4, further comprising:
a second regulatory part configured to regulate a translation of the pressing member in a third direction perpendicular to the second direction in the imaginary plane.

7. The light source device according to Claim 4, wherein
the pressing part is formed of a plate-like member of which a thickness in the second direction is smaller than a width in a third direction perpendicular to the second direction in the imaginary plane, and
a width in the third direction of the contact part at the contact position is smaller than a width in the third direction of the pressing part main body.

8. The light source device according to Claim 4, further comprising:
a third regulatory part configured to regulate a translation of the reflecting member in the second direction and a third direction perpendicular to the second direction in the imaginary plane.

9. The light source device according to Claim 1, wherein
the reflecting member and the pressing member are formed of an integrated member.

10. The light source device according to Claim 1, further comprising:
a support member having a support surface configured to support the light guide member; and
a fixation member which is disposed so as to be opposed to the third face of the light guide member, and which is configured to fix the light guide member to the support member in a pressed state.

11. The light source device according to Claim 10, wherein
when defining a force of the pressing member pressing the reflecting member in the first direction as F, a force of the light guide member pressing the support member in the second direction with the fixation member as N, and a friction coefficient between the fourth face of the light guide member and the support surface of the support member as µ, F<N×µ is fulfilled.

12. The light source device according to Claim 1, wherein
an area of the reflecting surface of the reflecting member is larger than an area of the second face of the light guide member.

13. The light source device according to Claim 1, wherein
the light emitting element is configured to emit first light having a first wavelength band, and
the light guide member is a wavelength conversion member which includes a phosphor, and which is configured to convert the first light emitted from the light emitting element into second light having a second wavelength band different from the first wavelength band to emit the second light.

14. A projector comprising:
the light source device according to Claim 1;
a light modulation device configured to modulate the light emitted from the light source device in accordance with image information; and
a projection optical device configured to project the light modulated by the light modulation device.

## Patentansprüche

1. Lichtquellenvorrichtung, umfassend:
ein lichtemittierendes Element, das eingerichtet ist, Licht zu emittieren;
ein Lichtleiterelement, das eingerichtet ist, das Licht, das von dem lichtemittierenden Element emittiert wird, zu leiten;
ein reflektierendes Element mit einer reflektierenden Oberfläche, das eingerichtet ist, das Licht, das durch das Lichtleiterelement geht, zu reflektieren; und
ein Presselement, das eingerichtet ist, das reflektierende Element gegen das Lichtleiterelement zu pressen, wobei
das Lichtleiterelement enthält
eine erste Fläche und eine zweite Fläche, die sich an entsprechenden Seiten in einer ersten Richtung als eine Längsrichtung des Lichtleiterelements einander gegenüberliegen, und
eine dritte Fläche und eine vierte Fläche, die an entsprechenden Seiten in einer zweiten Richtung in einer imaginären Ebene senkrecht zu der ersten Richtung einander gegenüberliegen,
das Licht, das durch das Lichtleiterelementgeleitet wird, von der ersten Fläche emittiert wird,
das lichtemittierende Element so angeordnet ist, dass es der dritten Fläche gegenüberliegt,
die zweite Fläche und die reflektierende Oberfläche miteinander Kontakt haben und
das Presselement eingerichtet ist, das reflektierende Element von einer Oberfläche an einer der reflektierenden Oberfläche des reflektierenden Elements gegenüberliegenden Seite hin zu der zweiten Fläche zu pressen.

2. Lichtquellenvorrichtung nach Anspruch 1, wobei
das Presselement enthält
ein Pressteil, das eingerichtet ist, das reflektierende Element zu pressen, und
ein elastisches Teil, das an das Pressteil gekoppelt ist und das elastisch verformbar und elastisch wiederherstellbar ist, und
Flexibilität des elastischen Teils in der ersten Richtung höher ist als Flexibilität des elastischen Teils in der zweiten Richtung und einer dritten Richtung senkrecht zu der zweiten Richtung in der imaginären Ebene.

3. Lichtquellenvorrichtung nach Anspruch 1, wobei
das reflektierende Element und das Presselement aus entsprechenden, voneinander getrennten Elementen gebildet sind.

4. Lichtquellenvorrichtung nach Anspruch 3, wobei
das Pressteil einen Pressteilhauptkörper und ein Kontaktteil aufweist, das sich von dem Pressteilhauptkörper erstreckt und das eingerichtet ist, mit dem reflektierenden Element Kontakt zu haben, und
eine Kontaktposition des Kontaktteils in Bezug auf das reflektierende Element in einem Bereich einer Region gegenüber der zweiten Fläche des Lichtleiterelements aus einer Oberfläche an einer der reflektierenden Oberfläche des reflektierenden Elements gegenüberliegenden Seite liegt.

5. Lichtquellenvorrichtung nach Anspruch 4, weiter umfassend:
ein erstes regulatorisches Teil, das eingerichtet ist, eine Verschiebung des Presselements in der zweiten Richtung zu regulieren.

6. Lichtquellenvorrichtung nach Anspruch 4, weiter umfassend:
ein zweites regulatorisches Teil, das eingerichtet ist, eine Verschiebung des Presselements in einer dritten Richtung senkrecht zu der zweiten Richtung in der imaginären Ebene zu regulieren.

7. Lichtquellenvorrichtung nach Anspruch 4, wobei
das Pressteil aus einem plattenartigen Element gebildet ist, dessen Dicke in der zweiten Richtung kleiner als eine Breite in einer dritten Richtung senkrecht zu der zweiten Richtung in der imaginären Ebene ist, und
eine Breite in der dritten Richtung des Kontaktteils an der Kontaktposition kleiner ist als eine Breite in der dritten Richtung des Pressteilhauptkörpers.

8. Lichtquellenvorrichtung nach Anspruch 4, weiter umfassend:
ein drittes regulatorisches Teil, das eingerichtet ist, eine Verschiebung des reflektierenden Elements in der zweiten Richtung und einer dritten Richtung senkrecht zu der zweiten Richtung in der imaginären Ebene zu regulieren.

9. Lichtquellenvorrichtung nach Anspruch 1, wobei
das reflektierende Element und das Presselement aus einem integrierten Element gebildet sind.

10. Lichtquellenvorrichtung nach Anspruch 1, weiter umfassend:
ein Trägerelement mit einer Trägerfläche, das eingerichtet ist, das Lichtleiterelement zu tragen; und
ein Fixierungselement, das so angeordnet ist, dass es der dritten Fläche des Lichtleiterelements gegenüberliegt, und das eingerichtet ist, das Lichtleiterelement an dem Trägerelement in einem gepressten Zustand zu fixieren.

11. Lichtquellenvorrichtung nach Anspruch 10, wobei
wenn eine Kraft des Presselements, das das reflektierende Element in der ersten Richtung presst, als F, eine Kraft des Lichtleiterelements, das das Trägerelement in der zweiten Richtung mit dem Fixierungselement presst, als N, und ein Reibungskoeffizient zwischen der vierten Fläche des Lichtleiterelements und der Trägerfläche des Trägerelements als µ definiert sind, ist F<N×µ erfüllt.

12. Lichtquellenvorrichtung nach Anspruch 1, wobei
eine Gesamtfläche der reflektierenden Oberfläche des reflektierenden Elements größer als eine Gesamtfläche der zweiten Fläche des Lichtleiterelements ist.

13. Lichtquellenvorrichtung nach Anspruch 1, wobei
das Lichtleiterelement eingerichtet ist, erstes Licht mit einem ersten Wellenlängenband zu emittieren, und
das Lichtleiterelement ein Wellenlängenumwandlungselement ist, das einen Phosphor enthält und das eingerichtet ist, das erste Licht, das von dem lichtemittierenden Element emittiert wird, in zweites Licht mit einem zweiten Wellenlängenband umzuwandeln, das sich von dem ersten Wellenlängenband unterscheidet, um das zweite Licht zu emittieren.

14. Projektor, umfassend:
die Lichtquellenvorrichtung nach Anspruch 1;
eine Lichtmodulationsvorrichtung, die eingerichtet ist, das Licht, das von der Lichtquellenvorrichtung emittiert wird, in Übereinstimmung mit Bildinformationen zu modulieren; und
eine optische Projektionsvorrichtung, die eingerichtet ist, das Licht, das von der Lichtmodulationsvorrichtung moduliert wird, zu projizieren.

## Revendications

1. Dispositif de source de lumière comprenant :
un élément émetteur de lumière configuré pour émettre de la lumière ;
un élément guide de lumière configuré pour guider la lumière émise à partir de l'élément émetteur de lumière ;
un élément réfléchissant comportant une surface réfléchissante configurée pour réfléchir la lumière se propageant à travers l'élément guide de lumière ; et
un élément de pression configuré pour presser l'élément réfléchissant contre l'élément guide de lumière, dans lequel
l'élément guide de lumière inclut
une première face et une deuxième face situées sur des côtés respectifs opposés l'un à l'autre dans une première direction en tant direction longitudinale de l'élément guide de lumière, et
une troisième face et une quatrième face situées sur des côtés respectifs opposés l'un à l'autre dans une deuxième direction dans un plan imaginaire perpendiculaire à la première direction,
la lumière guidée à travers l'élément guide de lumière est émise à partir de la première face,
l'élément émetteur de lumière est disposé de manière à être opposé à la troisième face,
la deuxième face et la surface réfléchissante sont en contact l'une avec l'autre, et
l'élément de pression est configuré pour presser l'élément réfléchissant à partir d'une surface sur un côté opposé à la surface réfléchissante de l'élément réfléchissant vers la deuxième face.

2. Dispositif de source de lumière selon la revendication 1, dans lequel
l'élément de pression inclut
une partie de pression configurée pour presser l'élément réfléchissant, et
une partie élastique accouplée à la partie de pression, laquelle peut être déformée élastiquement et rétablie élastiquement, et
la flexibilité de la partie élastique dans la première direction est supérieure à la flexibilité de la partie élastique dans la deuxième direction et à une troisième direction perpendiculaire à la deuxième direction dans le plan imaginaire.

3. Dispositif de source de lumière selon la revendication 1, dans lequel
l'élément réfléchissant et l'élément de pression sont constitués d'éléments respectifs séparés l'un de l'autre.

4. Dispositif de source de lumière selon la revendication 3, dans lequel
la partie de pression comporte un corps principal de partie de pression, et une partie de contact s'étendant à partir du corps principal de partie de pression, et laquelle est configurée pour être en contact avec l'élément réfléchissant, et
une position de contact de la partie de contact par rapport à l'élément réfléchissant se trouve dans une plage d'une région opposée à la deuxième face de l'élément guide de lumière faisant partie d'une surface sur un côté opposé à la surface réfléchissante de l'élément réfléchissant.

5. Dispositif de source de lumière selon la revendication 4, comprenant en outre :
une première partie de régulation configurée pour réguler une translation de l'élément de pression dans la deuxième direction.

6. Dispositif de source de lumière selon la revendication 4, comprenant en outre :
une deuxième partie de régulation configurée pour réguler une translation de l'élément de pression dans une troisième direction perpendiculaire à la deuxième direction dans le plan imaginaire.

7. Dispositif de source de lumière selon la revendication 4, dans lequel
la partie de pression est constituée d'un élément du genre plaque, dont une épaisseur dans la deuxième direction est inférieure à une largeur dans une troisième direction perpendiculaire à la deuxième direction dans le plan imaginaire, et
une largeur dans la troisième direction de la partie de contact à la position de contact est inférieure à une largeur dans la troisième direction du corps principal de partie de pression.

8. Dispositif de source de lumière selon la revendication 4, comprenant en outre :
une troisième partie de régulation configurée pour réguler une translation de l'élément réfléchissant dans la deuxième direction et dans une troisième direction perpendiculaire à la deuxième direction dans le plan imaginaire.

9. Dispositif de source de lumière selon la revendication 1, dans lequel
l'élément réfléchissant et l'élément de pression sont constitués d'un élément intégré.

10. Dispositif de source de lumière selon la revendication 1, comprenant en outre :
un élément de support comportant une surface de support configurée pour supporter l'élément guide de lumière ; et
un élément de fixation disposé de manière à être opposé à la troisième face de l'élément guide de lumière, et lequel est configuré pour fixer l'élément guide de lumière à l'élément de support dans un état pressé.

11. Dispositif de source de lumière selon la revendication 10, dans lequel
lors de la définition d'une force de l'élément de pression pressant l'élément réfléchissant dans la première direction comme F, d'une force de l'élément guide de lumière pressant l'élément de support dans la deuxième direction avec l'élément de fixation comme N, et d'un coefficient de friction entre la quatrième face de l'élément guide de lumière et la surface de support de l'élément de support comme µ, F<N*µ est satisfaite.

12. Dispositif de source de lumière selon la revendication 1, dans lequel
une aire de la surface réfléchissante de l'élément réfléchissant est supérieure à une aire de la deuxième face de l'élément guide de lumière.

13. Dispositif de source de lumière selon la revendication 1, dans lequel
l'élément émetteur de lumière est configuré pour émettre une première lumière présentant une première bande de longueur d'onde, et
l'élément guide de lumière est un élément de conversion de longueur d'onde incluant un phosphore, et lequel est configuré pour convertir la première lumière émise à partir de l'élément émetteur de lumière en une deuxième lumière présentant une deuxième bande de longueur d'onde différente de la première bande de longueur d'onde pour émettre la deuxième lumière.

14. Projecteur comprenant :
le dispositif de source de lumière selon la revendication 1 ;
un dispositif de modulation de lumière configuré pour moduler la lumière émise à partir du dispositif de source de lumière en fonction d'informations d'image ;
et
un dispositif optique de projection configuré pour projeter la lumière modulée par le dispositif de modulation de lumière.
